# EUROPEAN PATENT APPLICATION

(11) **EP 1 239 271 A1**
(43) Date of publication of application: **11.09.2002**
(21) Application number: 01105718.9
(22) Date of filing: 07.03.2001
(51) Int. Cl.: G01J 5/12, G01J 5/16, G01K 13/00

(54) **An infrared medical thermometer**

(71) Applicant: Microlife Intellectual Property GmbH, 9442 Berneck (CH)
(72) Inventor: Chi, George, Yang-Mei, Tau-Yuan Hsien (TW)
(74) Representative: Hepp, Dieter

(57) **Abstract**

A medical infrared thermometer for measuring a patient's body temperature by sensing infrared radiation emitted from the patient's tympanic membrane has a thermometer housing (1) and a probe assembly (2). The probe assembly (2) comprises a hollow, substantially tubular probe body (3), a heat sink (5), an infrared sensor (7) and a radiation shield (10). The infrared sensor (7) is arranged in a sensor container (13). The radiation shield (10) is in tight contact with an inner surface (11) of the probe body (3). A gap (12) is formed between the container (13) and the radiation shield (10). This design allows a reduction of the outer diameter of the tip (15) of the probe body (3) which allows to use the thermometer (1) with pediatric patients.

## Description

The invention relates to an infrared medical thermometer with the features of the preamble of the independent claims.

Conventional electronic contact type clinical thermometers for measuring the body temperature on behalf of a thermistor detector arranged inside a probe tip are well known. A drawback of these thermometers is a long waiting time of about one to two minutes to get the final temperature reading. Infrared ear thermometers have became popular because they allow an ear temperature measurement in only one second.

Radiation of the tympanic membrane is detected with an infrared sensor which allows to determine the temperature of the membrane.

The infrared sensors used are thermopile sensors which have a hot junction directed towards the measurement surface and a cold junction for detecting the ambient temperature to provide a reference temperature. In order to ensure an accurate measurement, it is necessary, to keep the cold junction of the infrared detector at a constant temperature. The cold junction must be prevented from being heated up by the environment, especially by heat radiation and heat convection due to the surrounding ear canal when the sensor probe is inserted into the ear canal for measuring the ear temperature.

In order to avoid heating up of the cold junction, several proposals have been made.

In US 4 636 091 a radiation detector was suggested, which comprises a nose piece made substantially of aluminium. This nose piece is formed as a cup which eliminates the effect of the actual emissivity of the target surface by reflecting emissions from the target surface back to the surface.

EP 44791-B1 discloses an infrared detector. A sensor is mounted on an actively cooled heat sink. The heat sink is provided with a radiation shield forming a gap to the outer body of the detector.

The problem of heating up the cold junction of the thermopile is addressed in US 5 018 872. An infrared medical thermometer with a thin-walled tubular probe body is suggested therein. A heat sink, a sensor container and a heat conductive radiation shield are arranged within the tube. An air gap is formed between the cylindrical shield and the probe body and between the sensor container and the radiation shield. The probe body may be heated up trough contact with the ear canal. The radiation shield is heated up trough radiation of the tympanic membrane. Because of the air gaps, heating of the sensor container and of the cold junction shall be prevented.

While the arrangement disclosed in US 5 018 872 allows to prevent the cold junction from being heated up, such a thermometer still has certain drawbacks. Especially, because of the two annular gaps, the probe has a substantial outer dimension. Because it is often difficult to measure the oral or axillary temperature of children with contact thermometers, it would be preferred to measure the children's temperature with an infrared ear thermometer. Because of the relatively large outer dimensions of the ear temperature sensing probe assembly, this is however difficult. Based on the clinical research, an infant of ten months age has an ear diameter of about 7 mm. A four years old child has an ear diameter of approximately 7,7 mm, while normal adult's ear canal diameters are approximately between 9 and 10 mm. As Infrared ear thermometer probe tips existing on the market have outer diameters of about 7.6 to 8.2 mm, accurate measurements with such existing infrared thermometers are difficult to achieve with pediatric patients.

It is therefore an object of the present invention to overcome the drawbacks of the prior art, especially to provide an infrared thermometer which allows an accurate measurement of the ear canal of infants and children.

The thermometer shall be designed in such a way that heating up of the cold junction of the thermopile is prevented.

The infrared thermometer shall allow a quick and reliable measurement of the ear temperature of the patient. The infrared thermometer further shall be manufactured in a easy and economic manner.

According to the invention, this objects are solved with an infrared thermometer according to the patent claims.

The infrared medical thermometer for measuring a patient's body temperature by sensing infrared radiation emitted from the patient's tympanic membrane includes a thermometer housing to which a probe assembly is attached. The thermometer housing is constructed in a known manner. A display for displaying the temperature, operation keys and electronic parts for calculating the temperature are included in the housing.

The present invention is directed to the construction of the probe assembly. The probe assembly comprises a hollow, substantially tubular probe body. The probe body has an open end to let the thermopile sensor located inside the probe front be able to receive the Infrared radiation when the probe is inserted into the patient's ear canal.

Within the probe body, there is arranged a heat sink which has a forward end. The heat sink can carry the thermopile sensor and conduct the sensor heat so as to provide a constant temperature environment for the thermopile sensor.

An infrared sensor is arranged within the probe body. The infrared sensor is a thermopile sensor known as such and has a hot junction facing the open end of the probe body and a cold junction facing the heat sink. The cold junction is tightly placed onto the sink.

The probe assembly is further provided with a radiation shield. The radiation shield is arranged at the open end of the probe body, surrounding the infrared sensor.

According to the invention, the radiation shield is arranged in contact with an inner surface of the probe body. An annular gap is formed between the radiation shield and the infrared sensor. This air gap can offer a good heat insulation for the infrared sensor while the probe assembly is heating up during temperature measurement.

This construction of the probe assembly has several advantages. Because of the gap between the radiation shield and the infrared sensor, heat convection from the probe body or from the radiation shield to the infrared sensor can be avoided. Because the radiation shield is tightly inserted into the probe body and closely contacted with the inner side of the plastic probe, the outer diameter of the tip of the probe body can be reduced in such an amount that insertion of the probe into an infant's or children's ear canal is possible. The cold junction of the sensor in contact with the heat sink allows to keep the cold junction of the sensor at substantially a constant temperature.

The heat sink has a relatively high thermal capacity, such that the heat sink is not substantially heated up during operation of the thermometer.

In a preferred embodiment of the invention, the radiation shield is in thermal contact with the heat sink. While the radiation shield is made of a high heat reflectivity material, it will be, however, heated up trough radiation emitted by tympanic membrane. Because of the thermal contact between the radiation shield and the heat sink, the temperature of the radiation shield can also be kept substantially constant.

According to a further preferred embodiment, the infrared sensor is arranged in a sensor container which is in thermal contact with the heat sink. In this case, an annular gap is formed between the radiation shield and the sensor container. In case the sensor container is heated up, heat is conducted to the heat sink. A temperature rise of the sensor container is hereby avoided.

The probe body is preferably made of a material having a low thermal conductivity. The probe body is typically made of a plastic material. In the context of this invention, low thermal conductivity means a thermal conductivity which is low as compared to metal parts or materials

In operation, the probe assembly is heated trough contact of the probe body with the ear canal and trough radiation received by the radiation shield. Heating up of the probe body and of the radiation shield is avoided because the probe body and the radiation shield are in thermal contact with the heat sink. This design allows a substantial reduction of heating up of the cold junction. However, an absolute constant temperature of the cold junction hardly can be achieved. According to a further preferred embodiment, the cold junction therefore is additionally provided with a thermistor. The thermistor is used to measure the cold junction's temperature. Thermopile sensors generate a DC voltage output which is proportional to the temperature difference between the detector's hot junction and the cold junction. An accurate temperature measurement therefore is possible when the cold junction remains at a constant temperature. If such a constant temperature operation can not be achieved, temperature changes of the cold junction may be taken into consideration for determining the measured temperature. The thermistor arranged at the cold junction therefore allows to take into consideration with the temperature changes at the cold junction.

The combination of a probe body with a small outer diameter on the probe front, a radiation shield tightly attached in the probe body and an infrared sensor in a housing separated through a gap from the radiation shield in combination with a thermistor for correcting temperature changes at the cold junction allows for a precise measurement of the temperature of the ear canal of infants or children. It is therefore preferred that the probe body head has an outer diameter sized to fit into an ear canal, especially having a tip with an outer diameter of less than or at most equal to 7 mm.

According to a further preferred embodiment of the invention, the radiation shield is formed of a substantially cylindrical body having an end surface with a transmission opening formed therein. The end surface helps to keep away radiation from the sensor container and therefore avoids heating up of the sensor container through radiation. The radiation sensor senses radiation which is passing trough the transmission opening in the radiation shield.

According to a further preferred embodiment, an infrared sensor is used, which has a field of view which is sized in such a way that only radiation emitted by the tympanic membrane is sensed by the sensor. Radiation emitted by the part outside the eardrum hereby is not sensed by the sensor. Wrong measurement results based on heating up of the radiation shield are avoided therewith.

The sensor container preferably is formed with an opening which is closed with a filter which is transparent to infrared radiation and which is made of a material having a low thermal conductivity. The filter can be made for example of silicon. In this contact, a low thermal conductivity means a conductivity which is lower than the conductivity of the material of the sensor container. Even if the sensor container is heated up during operation of the thermometer, heat is conducted towards the heat sink, which is made of a high thermal conductive material but not towards the filter closing the opening of the sensor container. The filter remains therefore at a constant temperature and does not emit radiation which could create inaccurate measurement results. Such a filter has also advantages in combination with any other designs of a probe than the one described above and forms on independent invention.

According to a further preferred embodiment of the invention, the instrumentational offset of the probe assembly is minimised in such a way that the tympanic membrane temperature measurement result made with the thermometer corresponds to the oral temperature of the patient.

The ear temperature is usually about 0,3 to 0,5° C higher than the sublingual temperature.

Typical oral temperatures are about 0,4° C lower than simultaneously measured pulmonary artery temperatures. This temperature difference between different body site is called the physiological site offset. A signal detected by an infrared radiation sensor depends on several parameters, such as the field of view, the temperature of its cold junction, the distance between the infrared sensor and the measured target and also on the algorithm used in the measuring software. The difference between a core temperature measured by a contact thermometer and the temperature measured with an infrared ear thermometer in an unadjusted mode is called the instrumentational offset. The instrumentational offset is related to the design of the probe and to the clinical test data base. Through the experimental way such as by repeatedly tuning the field of view of the sensor based on the ear temperature and oral temperature measurement data, the ear temperature measurement result can be approached to the oral temperature.

Based on the pediatric patient's temperature provided by the clinical database, the ear temperature reading on pediatric patient's can be adjusted in such a way that it approaches the oral temperature measuring result. This can be achieved by a specific design of the probe. Especially, the diameter of the transmission opening in the radiation shield and the distance between the radiation detector and the target are specifically designed.

The instrumentational offset is defined as follows: Ins_Off = (ear temperature - core temperature)

The physiological offset is defined as follows: Phy_Off = (oral temperature - core temperature)

The combined offset is defined as follows: Comb_Off = (ear temperature - oral temperature)

It follows:
Ins_Off= (ear temperature - core temperature) = (ear temperature - oral temperature + oral temperature - core temperature) = (Comb_Off + Phy_Off)

The instrumentational offset therefore can also be seen as the sum of the combined offset and the physiological offset.

The physiological offset is a fixed value and can not be changed. By minimising the intrumentational offset (to the value of Phy_Off), the combined offset becomes equal to 0. With such a combined offset, the ear temperature reading is equal to the oral temperature reading.

With this design, it is not necessary to add an offset value to the ear reading measurement in order to simulate other body site temperatures such as the oral temperature. According to this aspect of the invention the instrumentational offset is designed in such a way that the ear temperature is simulated as the oral temperature. This is achieved by tuning the field of view of the detector and by sizing the transmission opening in the radiation shield in combination with adjusting the distance between the sensor and the target, i.e. the tympanic membrane.

The field of view of the radiation detector is selected in such a way that only radiation emitted from the ear drum is received by the infrared sensor.

Comparing to known IR ear thermometer, as these ear thermometers have added an offset value onto the calibration parameter, so as to follow the body site temperature, with the design of this invention, it is not necessary to add an offset value when the body temperature measurement is completed. This may result in a consistent measurement reading both in blackbody temperature measuring and clinical test. This is achieved by tuning the field of view and the distance from the sensor to the tympanic membrane, so as to let the clinical measurement be consistent to the laboratory blackbody test. In other words, the blackbody test is treated as a standard field of view and the sensor height inside the probe, are fine adjusted and eventually, the body temperature measurement is made consistent to the blackbody test. This embodiment is also advantageous in combination with other probe designs and is not limited to the embodiments described above and forms a separate invention.

The invention will now be explained in a preferred embodiment and on behalf of the accompanying drawings. Like reference numerals refer to same parts troughout the different views.

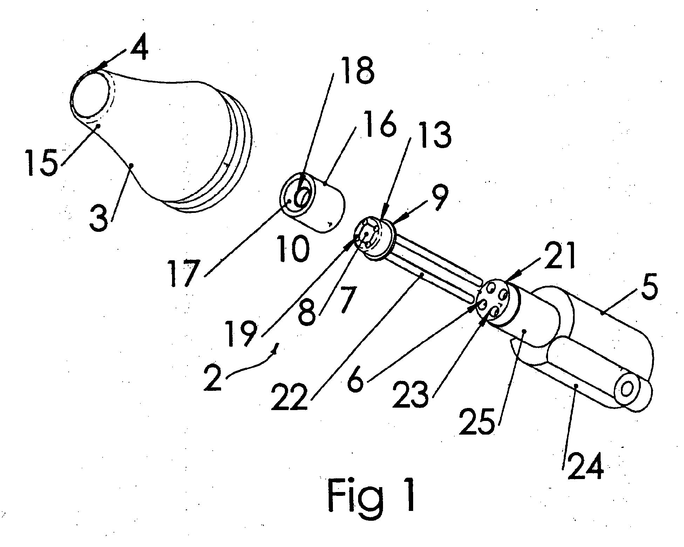

Figure 1 shows an exploded view of an embodiment of the probe assembly according to the invention.

Figure 2 shows a perspective view of the probe assembly according to the invention.

Figure 3 shows a cross section trough the probe assembly according to the invention.

Figure 4 shows a more detailed cross section trough the tip of a probe assembly according to the invention.

An infrared ear thermometer comprises a probe assembly 2 for measuring a surface temperature on the basis of radiation emitted by the surface. The probe assembly 2 comprises a probe body 3. The probe body 3 is hollow and is formed substantially tubularly. The probe body 3 has an open end 4 which may be inserted into a patient's ear canal. The probe body 3 is made of a low heat conductivity material, such as the plastic related material.

A heat sink 5 is arranged within the probe body 3. The heat sink is made of a high heat conductivity material, such as aluminum. The heat sink 5 has a forward end 6.

The probe assembly 2 is further provided with an infrared sensor 7. The infrared sensor 7 has a hot junction 8 facing the open end 4 of the probe body 3 and a cold junction 9 facing the forward end 6 of the heat sink 5. The infrared sensor 7 is provided with wires 23. The wires 23 may be guided through openings 23 formed in the heat sink 5.

The heat sink 5 is formed of a substantially cylindrical rear portion 24, a substantially cylindrical intermediate portion 25 having a smaller diameter than the rear portion 24 and of a cylindrical surface 21 arranged adjacent the forward end 6 of the heat sink 5. The cylindrical surface 21 has a smaller diameter than the cylindrical intermediate portion 25.

The probe assembly 2 is further provided with a radiation shield 10. The radiation shield 10 is made of a high heat conductivity and high heat reflectivity material, such as copper, plated with gold.

The radiation shield 10 comprises a substantially cylindrical body 16 which is provided with an end surface 17. A transmission opening 18 for radiation is formed in the end surface 17.

The radiation sensor 7 comprises a sensor container 13. The sensor container 13 is closed with a membrane 19 made of low heat conducting material such as silicon.

The infrared sensor 7 is arranged between the heat sink 5 and the radiation shield 10. The heat sink 5, radiation shield 10 and infrared sensor 7 are inserted into the probe assembly 2.

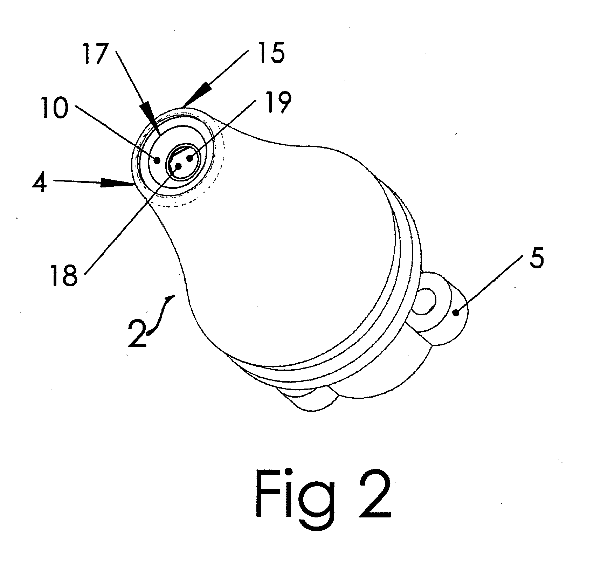

Figure 2 shows a perspective view of the probe assembly 2. The probe assembly 2 has a tip 15 sized to fit into a patient's ear canal, especially into a infants or children's ear canal.

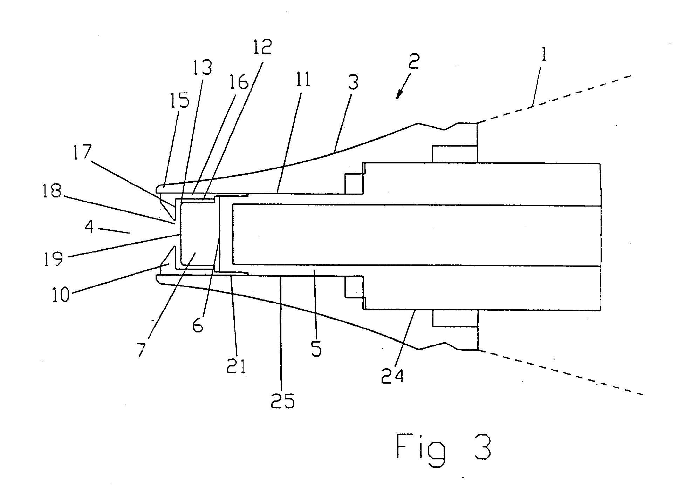

Figure 3 shows a cross sectional view through a thermometer according to the invention. A housing 1 for the thermometer is schematically shown. The probe assembly 2 is attached to the thermometer housing 1.

The probe body 3 has a substantially elongated, conical outer surface. The probe body 3 is further provided with a cylindrical inner surface 11. The radiation shield 10 is arranged at the open end 4 of the probe body 3 in such a way that it tightly contacts the inner cylindrical surface 11 of the probe body 3. The radiation shield 10 is, with the lower end of its cylindrical part 16 in tight contact with the cylindrical surface 21 adjacent the forward end 6 of the heat sink 5. The cylindrical intermediate portion 25 of the heat sink is in tight contact with the cylindrical inner surface 11 of the probe body 3.

A gap 12 is formed between the cylindrical body 16 of the radiation shield 10 and the other surface of the sensor container 13.

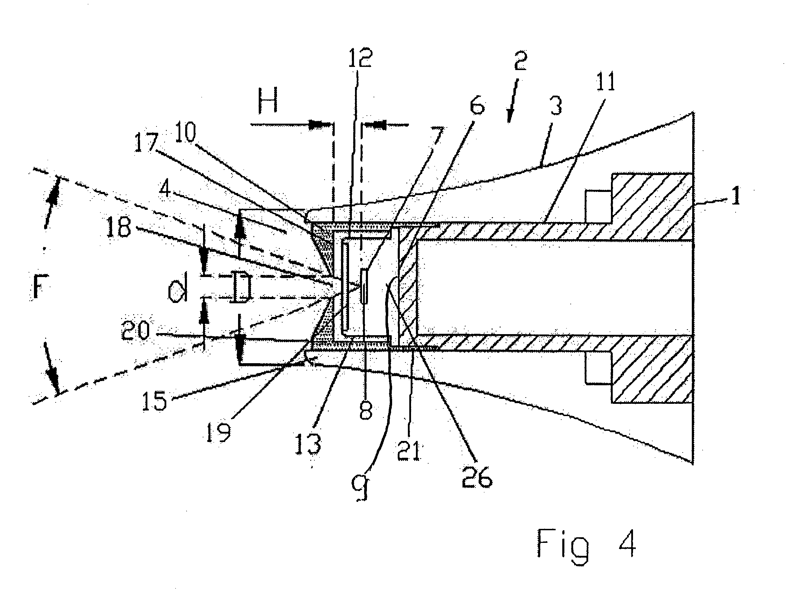

The dimensions of the several parts are shown in more detail in figure 4.

The probe body 3 has a tip 15 with an outer diameter D of about 7∼7.3 mm.

The radiation shield 10 and the heat sink 5 are in tight contact with the cylindrical inner surface 11 of the probe body 3. The heat sink 5 is made of aluminum or like material and it is substantially hollow.

The lower end of the cylindrical body 16 of the radiation shield 10 is in tight contact with the cylindrical surface 21 adjacent the forward end 6 of the heat sink 5.

The sensor container 13 is formed substantially cylindrically in such a way that a gap 12 is formed between the sensor container 13 and the cylindrical body 16 of the radiation shield 10. The sensor container 13 is in thermal contact with the heat sink 5. A thermo-pile 26 is arranged in the sensor container 13. The hot junction 8 of the thermo-pile 26 faces the open end 4 of the probe assembly 2. The cold junction 9 contacts the sensor container and the forward end 6 of the heat sink 5.

The sensor container 13 is closed with the membrane 19.

The thermopile 26 is designed with a field of view F of about 60°. Typically, a thermopile of the type Heimann TPS-333 is used.

The field of view F of the thermopile 26 is selected in such a way that only radiation emitted by the tympanic membrane can be considered by the thermopile 26. No radiation emitted from the radiation shield 10 or from the container 13 are considered by the thermopile 26.

The radiation shield 10 is provided with an end surface 17. The end surface 17 ensures, that no radiation emitted by the tympanic membrane is received by the sensor container 13. Heating up of the sensor container 13 is avoided therewith. The end surface 17 is provided with a transmission opening 18. The transmission opening 18 allows radiation emitted by the tympanic membrane to pass through and to impact on the hot junction 8 of the infrared sensor 7. The inner diameter d of the transmission opening is typically between 2.0 and 2.5, preferably 2.4.

The distance H between the hot junction 8 of the infrared sensor 7 and the inner end surface 17 of the radiation shield 18 is typically 1.0 +/- 0.2 mm.

The diameter d of the opening 18 of the radiation shield 10 and the distance H between the inner surface 17 of the radiation shield 10 and the hot junction 8 of the thermopile 26 are arranged in such a way that the instrumentational offset of the probe assembly 2 is minimised. The temperature reading of the tympanic membrane therefore corresponded to the oral temperature of the patient.

A thermistor is provided at the cold junction 9. Temperature changes which may not completely avoided with the present arrangement can be taken into consideration when the temperature of the cold junction 9 is measured with the thermistor.

### Heat flow in the probe 2 is as follows:

Heating up of the cold junction 9 is substantially avoided due to the specific design of the present probe assembly 2. Heat in the probe body 3 is directed to the heat sink 5 which has a high thermal capacity, such that the heat sink 5 is not substantially heated.

Heat in the radiation shield 10 created through radiation is also conducted towards the heat sink 5 due to the tight contact between the radiation shield 10 and the cylindrical portion 21 of the heat sink 5.

As the sensor container 13 is isolated from the radiation shield 10 by the gap 12, the sensor container 13 can not be heated up through radiation because of the radiation shield 10. Due to its low thermal conductivity, the membrane 19 is not heated up by radiation passing trough the transmission opening 18. Heat is conducted from the membrane 19 to the sensor container 13 and to the heat sink 15. In addition, due to the specific selection of the field of view F, only heat providing from the tympanic membrane is considered by the thermopile 26.

## Claims

1. An infrared medical thermometer (1) for measuring a patient's body temperature by sensing infrared radiation emitted from the patient's tympanic membrane, the thermometer having a probe assembly (2) comprising
a hollow, substantially tubular probe body (3) with an open end (4) for insertion into the patient's ear canal,
a heat sink (5) arranged in said probe body (3) and having a forward end (6),
an infrared sensor (7) arranged within said probe body (3), having a hot junction (8) facing said open end (4) and a cold junction facing said forward end (6) of said heat sink (5),
and a radiation shield (10) arranged at said open end (4) of said probe body (3), and is surrounding said IR sensor(7)
wherein that radiation shield (10) is in contact with an inner surface (11) of said probe body (3) and wherein a gap (12) is formed between said radiation shield (10) and said sensor (7).

2. A thermometer according to claim 1, wherein the radiation shield (10) is in heat contact with said heat sink (5).

3. A thermometer according to one of the claims 1 or 2, wherein the infrared sensor (7) is arranged within a sensor container (13) which is in contact with said heat sink (5).

4. A thermometer according to one of the claims 1 to 3, wherein said probe body (3) is made of a material having a low thermal conductivity, such as plastic material.

5. A thermometer according to one of the claims 1 to 4, wherein said cold junction (9) is provided with a thermistor (14) for measuring the cold junction's (9) temperature.

6. A thermometer according to one of the claims 1 to 5, wherein the probe body (3) has an outer diameter sized to fit into a child's ear, especially wherein said probe body (3) has a tip (15) with an outer diameter (D) of about 7 mm.

7. A thermometer according to one of the claims 1 to 6, wherein said radiation shield (10) has a substantially cylindrical body (16) and an end surface (17) with a heat radiation transmission opening (18) formed therein.

8. A thermometer especially according to claim 7, wherein said sensor (7) has a field of view (F) sized such that only radiation emitted from the tympanic membrane is sensed by said sensor (7), whereby radiation emitted by the radiation shield (10) and/or the sensor container (13) is not sensed by said sensor (7).

9. A thermometer especially according to one of the claims 3 to 8, wherein said sensor container (13) is closed with a silicon filter(19) transparent to infrared radiation and made of a material having a low thermal conductivity.

10. A thermometer especially according to one of the claims 1 to 9, wherein the measurement reading's instrumentational offset (Ins_Off) of the probe assembly (2) is minimized such that the tympanic temperature measurement result with said thermometer (1) corresponded to the oral temperature of the patient.

11. A thermometer according to claim 10, wherein the inner diameter (d) of said transmission opening (18) and the distance (H) between said infrared sensor (7) and said end surface (17) of said radiation shield (10) is sized such the said tympanic temperature of said patient measured with said thermometer corresponds to the oral temperature of the patient.

12. A thermometer according to one of the claims 7 to 11, wherein the radiation shield (10) has a conical outer surface (20).

13. A method for measuring the body temperature of a patient, comprising the steps
a) providing a thermometer according to one of the claims 10 or 11,
b) measuring the tympanic temperature of the patient with such thermometer,
c) displaying the measured tympanic temperature.
